Europäisches Patentamt

European Patent Office

Office européen des brevets

(19)

(11) Publication number: **0 073 096**
**A1**

## (12) EUROPEAN PATENT APPLICATION

(21) Application number: **82303726.2**

(22) Date of filing: **15.07.82**

(51) Int. Cl.³: **B 60 N 1/06**

(30) Priority: **13.08.81 US 292576**

(43) Date of publication of application:
**02.03.83 Bulletin 83/9**

(84) Designated Contracting States:
**AT BE DE FR GB IT NL**

(71) Applicant: SEARS MANUFACTURING COMPANY
P.O. Box 3667
Davenport Iowa 52808(US)

(72) Inventor: Koutsky, John L.
521 W. 14th Avenue
Milan Illinois(US)

(72) Inventor: Foster, Danny
716 West 61st Street
Davenport Iowa(US)

(74) Representative: Allden, Thomas Stanley et al,
A.A. THORNTON & CO. Northumberland House 303-306
High Holborn
London WC1V 7LE(GB)

(54) Seat support and suspension system.

(57) A seat support and suspension system having a vertically acting mechanical linkage (32) and a horizontally acting hydraulic driving means (60) for moving the mechanical linkage to determine the vertical position of the seat (12).

Croydon Printing Company Ltd

0073096

## SEAT SUPPORT AND SUSPENSION SYSTEM

### Background Of The Invention

This invention relates generally to a seat support and suspension system and, more particularly, to a compact hydraulically operated seat support and suspension system suitable for mounting in a motor vehicle.

The dual requirements of vehicle safety and comfort call for the provision of driver seat support and suspension systems which permit adjustable, automatic-leveling ride heights as well as substantial isolation from the shocks and vibrations produced in the vehicle as it moves along a road or other terrain.

Typically, these requirements have been less than adequately met by massive, complex, seat supports which are ill-suited to the narrow confines typically found in modern vehicles, such as heavy duty trucks and tractors. Such vertically operating apparatus requires substantial clearance between the bottom of the seat being supported and the floor of the vehicle. Furthermore, massive apparatus adds to the weight of the vehicle, and hence to its fuel consumption.

The complexity of the prior seat support and suspension apparatus has made it both difficult to operate and to service. Prior art supports utilizing hydraulic systems, in particular, have been subject to multiple hydraulic leaks due to the complex hydraulic piping utilized.

Thus, a relatively simple and compact seat hydraulic support and suspension system has not been supplied by the prior art, and the need for such a system remains unsatisfied.

## Summary Of The Invention

It is therefore an object of the present invention to provide a relatively simple, compact seat support and suspension system which can be utilized in confined areas.

Yet another object of the present invention is to provide a horizontally acting support and suspension system for a low profile, vertically moveable seat. A further object of the present invention is to provide a seat support and suspension system which includes hydraulic damping, ride height adjustment and automatic leveling.

In accordance with these and other objects and advantages of the present invention which will become apparent from reading the following detailed description, the present invention comprises a vertically acting mechanical linkage for carrying the seat in a generally vertical path and a horizontally acting hydraulic driving means linked to the mechanical linkage for moving the mechanical linkage to determine the vertical position of the seat. In important embodiments of the invention, the mechanical linkage comprises a pair of parallel acting scissors arms and the hydraulic driving means is linked to the mechanical linkage through a cam follower.

In further preferred embodiments of the invention, the driving means includes an actuator with a horizontally-acting piston driven shaft fluidly linked to an external reservior of pressurized fluid for adjusting the vertical piston of the seat and for maintaining automatic leveling. The adjusting means, in this preferred embodiment, includes means for introducing hydraulic fluid to the actuator or for removing hydraulic fluid therefrom to raise or lower the seat and a direct linkage to the actuator for closing the adjusting means when the desired height is reached.

The present device utilizes a unique new valve design in conjunction with a horizontally operating hydraulic power unit with direct mechanical linkage to its actuator to produce a novel apparatus which is compact in size and simple in operation.

Brief Description Of The Drawings

The features of this invention which are believed to be novel and unobvious are set forth with particularly in the appended claims. The invention, together with its objects and advantages, may be best understood by reference to the following description taken in conjunction with the accompanying drawings in which like reference numerals identify like elements in the several figures and in which:

FIGURE 1 is an elevation view of the seat support and suspension system of the present invention with one pair of scissors arms removed to permit closer scrutiny of the remainder of the system;

FIGURE 2 is a perspective view taken from a rear corner of the apparatus of FIGURE 1;

FIGURE 3 is a plan view of the system of FIGURE 1, with the seat and top plate removed;

FIGURE 4 is an enlarged perspective view of the hydraulic power unit depicted in FIGURES 1-3;

FIGURE 5 is an enlarged fragmentary view of a portion of the control block and an actuator sensing link of the hydraulic power unit of FIGURE 4;

- 4 -

FIGURE 6 is a partially sectioned elevation view of the specially designed spool valve of the present apparatus;

FIGURE 6a is an elevation view of the inner cylindrical spool of the valve of FIGURE 6;

FIGURES 6b and 6c are section views taken along lines 6b-6b and 6c-6c of FIGURE 6;

FIGURES 7 and 8 are schematic representations of the hydraulic power unit of the present invention; and

FIGURES 9a-9d are diagramatic representations of the operation of the specially designed spool valve of the present invention.

## Description Of The Preferred Embodiment

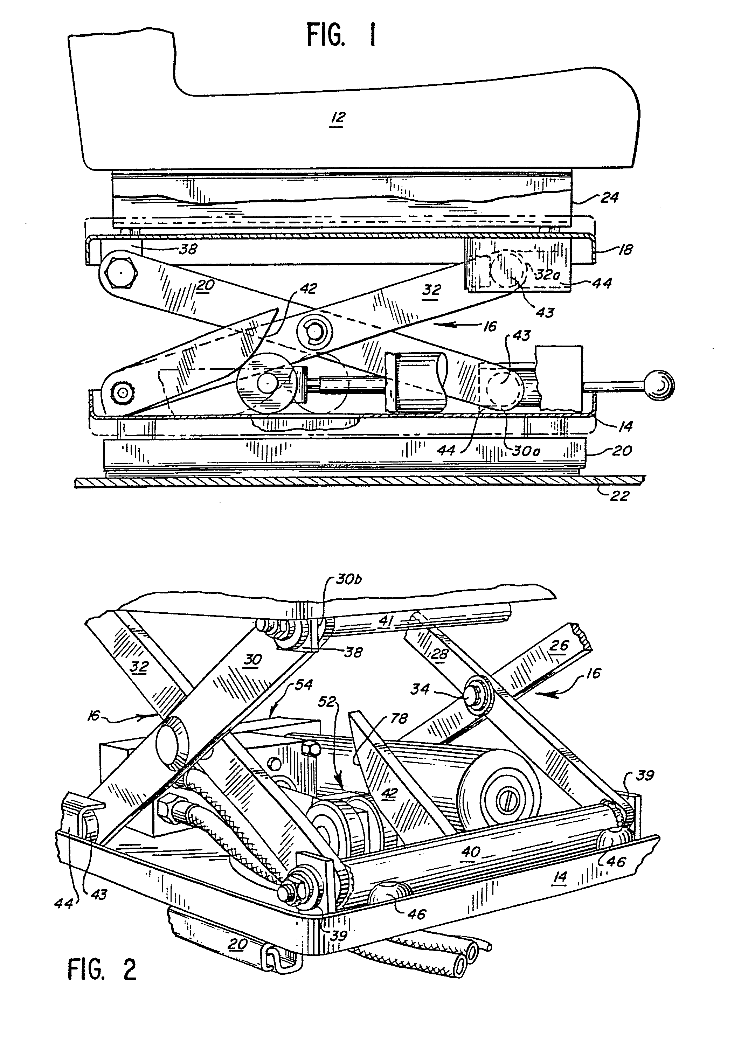

Turning now to FIGURE 1, there is shown a seat support assembly 10 bearing a seat 12. The seat support assembly generally comprises a bottom plate 14, a scissors linkage 16 and a top plate 18.

The bottom plate of the seat support assembly illustrated in the Figures is bolted to parallel rails 20 which are horizontally adjustable along floor 22 of a vehicle. In this particular embodiment, seat 12 is affixed to another pair of rails 24 which in turn are bolted to top plate 18.

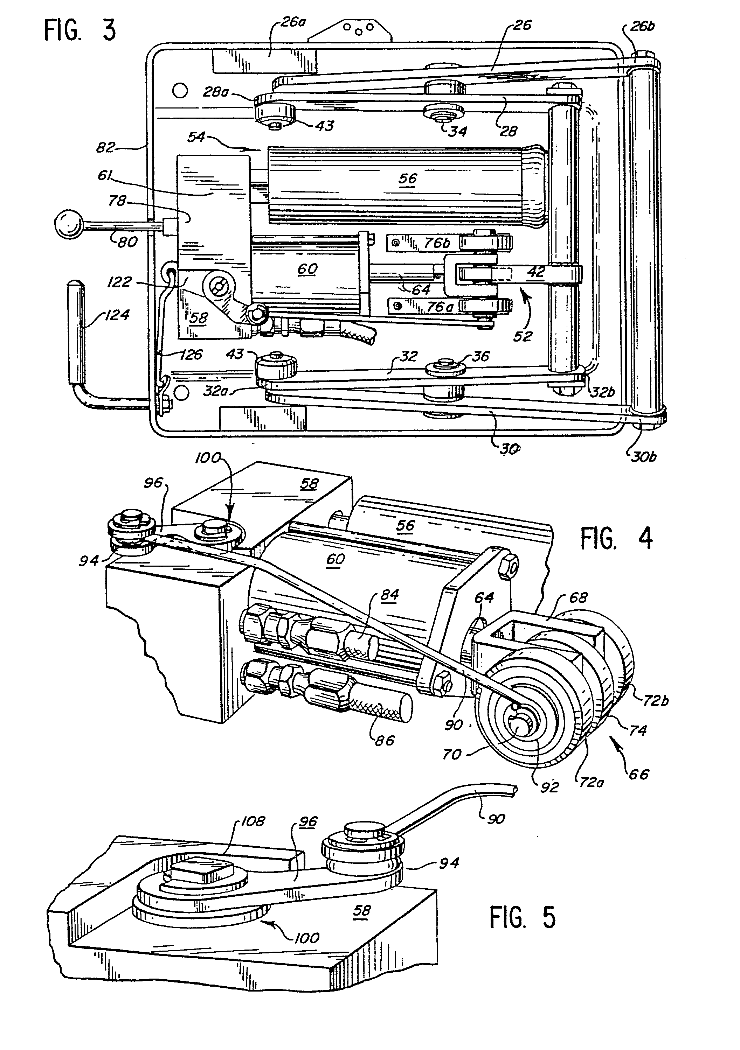

The scissors linkage, which may be best understood from the perspective view of FIGURE 2, is structured to permit the top plate to be maintained substantially parallel to bottom plate 14 while it is raised from or lowered to floor 22. The scissors linkage comprises two pairs of parallel scissor arms, 26 & 28 and 30 & 32, which are pivotably joined at their midpoints by bolts 34 and 36. The rearward ends 26b (FIGURE 3) and 30b of outer scissor arms 26 and 30 are pivotably attached to rearwardly placed brackets 38 which extend downwardly from top plate 18. The rearward ends 28b and 32b of inner scissor arms 28 and 32 are pivotably mounted to rearwardly placed brackets 39 which extend upwardly from the bottom plate of the support apparatus.

The rearward ends 28b and 32b of scissor arms 28 and 32 are welded to either end of a shaft 40 which extends across the rear of bottom plate 14. Shaft 40 includes a cam arm 42 which is also welded in place, and projects generally perpendicular to the axis of the shaft and generally parallel to scissor arms 28 and 32 so that movement of the cam arm tracks with the movement of these scissor arms.

The forward ends 28a and 32a of inner scissor arms 28 and 32 as well as the forward ends 26a and 30 a of outer scissor arms 26 and 30 are equipped with rollers 43 which are confined to horizontal linear motion in guides 44 at the forward corners of the top and bottom plates. The confined horizontal linear movement of forward ends 26a, 28a, 30a and 32a of the scissor arms, in conjunction with their fixed pivots at bolts 34 and 36 and their fixed pivots at rearward corner brackets 38 and 39 permit the top plate to move freely in a vertical direction between a closed position with the edges of the top and bottom plates in face-to-face relationship and a fully open position in which the top and bottom plates are maintained in parallel planes at a maximum separation.

When the support apparatus is in its closed position, bumpers 46 engage a shaft 41 connecting rearward ends 26b and 30b of scissor arms 26 and 30 to produce a cushioned effect. The range of opening movement of top plate 18, on the other hand, is limited by the engagement of rollers 43 at forward ends 28a and 32a of scissor arms 28 and 32 with bumpers 47 which are captured within the enclosed rearward ends of guides 44.

Scissors linkage 16 cooperates through a mechanical cam follower unit 52 with a hydraulic power unit 54. Since the hydraulic power unit operates in a horizontal fashion and therefore may be of extremely low profile, it fits readily within the space between bottom plate 14 and top plate 18, even in their closed position, with seat 12 adjacent floor 22. Furthermore, the hydraulic power unit not only isolates a rider ensconced on seat 12 from the shocks and bumps experienced by the vehicle in which the support mechanism is mounted, it also provides variable dampening means, ride height adjustment and automatic leveling, all as will be described in further detail below.

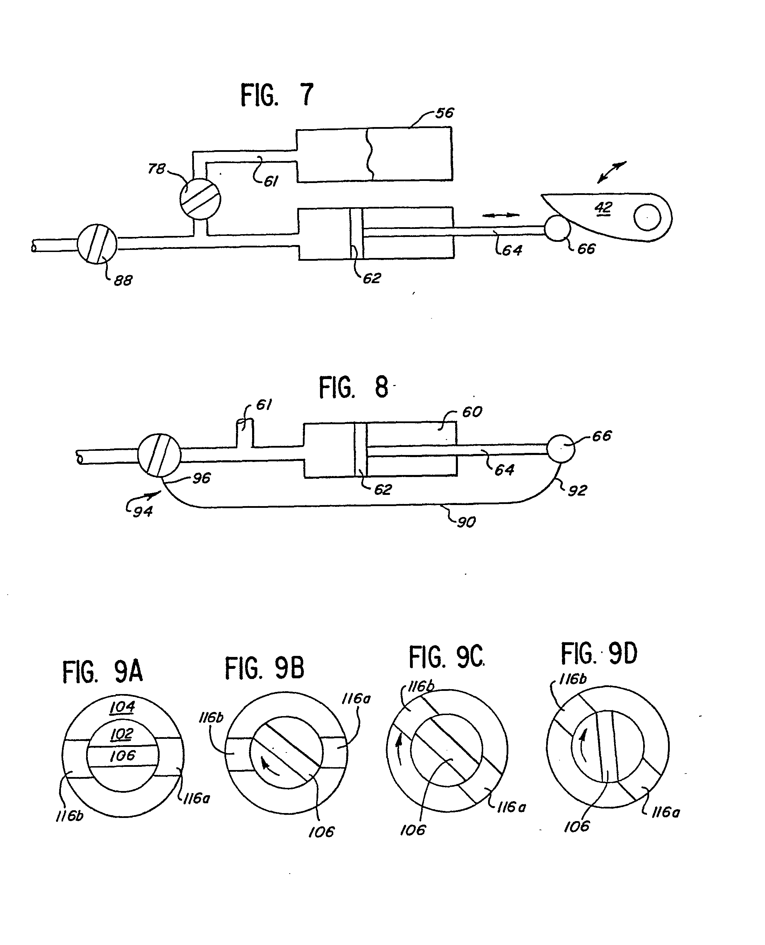

Hydraulic power unit 54, which may best be understood from the plan and partial perspective views of FIGURES 3 and 4 and the schematic representations of FIGURES 7 and 8, generally includes an accumulator 56 of conventional design, containing hydraulic fluid over a predetermined volume of inert gas. The accumulator is connected through a control block 58 to a piston driven actuator 60. A commercially available accumulator which could be used in the present invention is sold by Greer Hydraulics Incorporated under their trademark GREEROLATOR.

The piston 62 of actuator 60 is attached through a rigid shaft 64 to a cam follower 66. The cam follower includes a bracket 68 carrying a transverse axle 70 on which three rollers 72a, 72b and 74 are rotatably mounted. Rollers 72a and 72b are positioned to move along hardened wear strips 76a and 76b on bottom plate 14 as shaft 64 moves in and out of the actuator with the changing positions of piston 62 and roller 74 follows cam face 78 of cam arm 42. The cam follower thus serves to link the vertical movement of top plate 18 (and hence the rider ensconced on seat 12) through cam arm 42 to the horizontal movement of the cam follower and hence the actuator shaft.

This, in turn, permits the horizontally acting hydraulic power unit to function as a spring absorbing and dissipating acceleration inputs experienced by the vehicle.

More specifically, as the vehicle encounters a bump, a portion of the momentary acceleration experienced by the vehicle is transmitted through the cam follower to actuator 60 which causes oil in the system to flow through a passageway 61 in control block 58 to the accumulator. The oil entering the accumulator under the force of the acceleration compresses the gas in the accumulator, thus absorbing or storing at least a portion of the energy produced by the acceleration. This energy is subsequently released or dissipated by reversing the entire process at a specific predetermined rate dependent upon the rate at which hydraulic fluid can return from the accumulator to the actuator.

Although the system described above will generally isolate the rider from the momentary accelerations of the vehicle as it encounters bumps in the terrain, it will be subject to undesirable resonance at the natural frequencies of the system. At these frequencies, unless attenuation is introduced, the system will amplify rather than absorb the momentary accelerations.

A conventional approach to attenuating a resonant condition in this type of system is to introduce an additional damper, such as a shock absorber. However, since the damper must be tuned to act at the natural frequency of the system, it will maintain the same dampening rate throughout the entire range of vibration frequencies to which the system is subjected.

In other words, the performance of the system will be adversely affected at all frequencies outside of the resonance frequency. This problem does not arise in the mechanism of the present invention.

In the present invention, the desired attenuation at the resonant frequency is achieved by restricting the rate of flow of oil between the actuator and accumulator with a valve 78 which is introduced in the line between the accumulator and the actuator. Valve 78, which is controlled by a rotatable handle 80 protruding from the forward edge 82 of the seat support system, is a spool valve in the present embodiment, although needle, poppet, globe or other types of valves could be used. Thus, the rider merely rotates handle 80 to balance the atten ua tion of the resonant condition against the degree to which the operator wishes to isolate himself from the bumps and vibrations experienced by his vehicle.

Thus far, the hydraulic power unit has been described as if it were an entirely self-contained system. In fact, in the present invention, the hydraulic power unit is connected at control block 58 to input line 84 and output line 86 of the vehicle hydraulic supply (not shown). The pressure in the vehicle hydraulic supply can vary greatly, although pressures in the range of 250-300 psi have been found to function particularly well in the present embodiment of the invention. The vehicle hydraulic supply is utilized in this system in a manner which permits automatic leveling and adjustable ride height to be achieved in a simple, straightforward fashion.

The operation of the automatic leveling feature of the present invention can best be understood from the schematic representation of FIGURE 8 taken with the partial perspective

views of FIGURES 4 and 5.  This feature of the invention will be explained, beginning with an equilibrium condition corresponding to a vehicle at rest with the seat support system in the position depicted in FIGURES 1 and 2, which corresponds to the seat height and actuator position of FIGURE 8.

In this equilibrium condition, seat 12 is at rest at the desired vertical height and vehicle supply valve 88 is closed.  As the vehicle begins to move and picks up speed or encounters bumps or ruts, the equilibrium is upset causing the seat to move up or down and the cam follower and actuator shaft to move either to the right or to the left.  The movement of the cam follower is accompanied by simultaneous movement of a rigid actuator sensing link 90 which is attached at 92 to the transverse axle 70 of the cam follower.  The other end 94 of the sensing link is attached to a valve control arm 96 which rotates vehicle supply valve 88 to open the system permitting hydraulic fluid to be either introduced or removed until equilibrium is re-established.

Although the ride height could be automatically maintained in the manner just described for a pre-determined seat support system ride height, it is also desirable to be able to adjust the ride height of the system.  This is accomplished in the present invention by using a specially designed spool valve 100 in lieu of vehicle supply valve 88 of FIGURES 7 and 8 to perform the automatic leveling function of valve 88 over the entire range of ride heights of the seat support system.

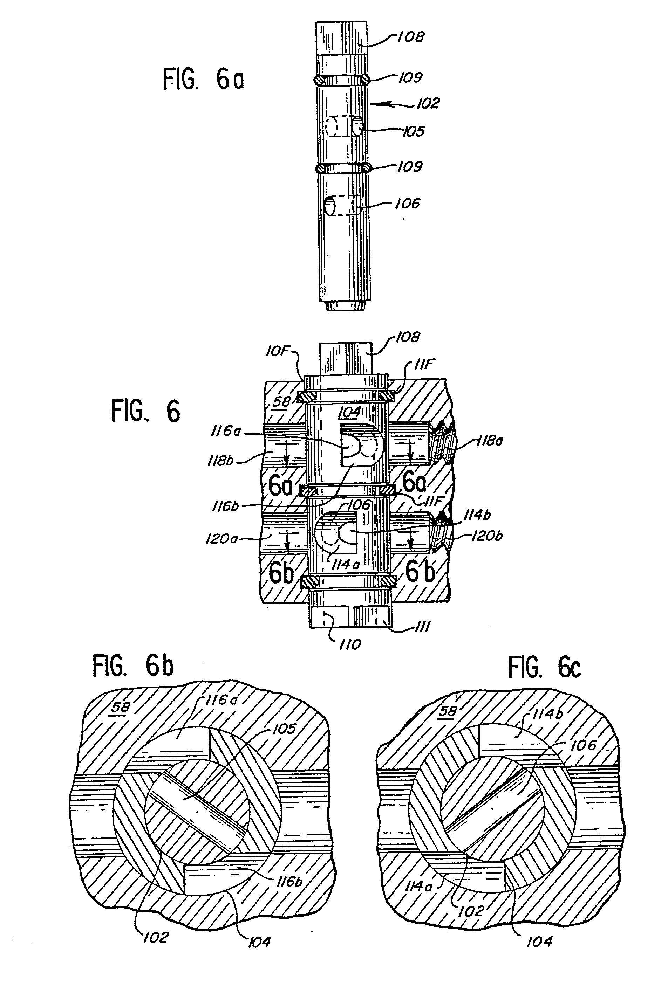

Valve 100, which is illustrated in FIGURE 6, includes a solid inner cylindrical spool 102 which rests within an intermediate sleeve 104 mounted in a cylindrical cavity 107 in control block 58.  The fit between the spool and the sleeve and between the sleeve and the block cavity is snug to prevent leakage while permitting the spool to be rotated within the sleeve and the sleeve to be rotated within the block cavity.

Spool 102 includes cylindrical diametric passages 105 and 106 and a square crown 108. These diametric passages carry hydraulic fluid across the valve, in a manner which will be described in detail below. The square crown is arranged to protrude from the fully assembled valve to permit the spool to be easily grasped and rotated. A series of "O" ring gaskets 109 are provided along the outer surface of the spool to prevent leakage of hydraulic fluid at the interface between the inner spool and the sleeve.

The sleeve has a central axial passage 110 to accept inner cylindrical spool 102. The base of the sleeve, which is arranged to protrude from the fully assembled valve, is squared off at 111 in a manner similar to that of crown 108 of the inner spool to permit the sleeve to be readily grasped and turned. Ports 114a & 114b and 116a & 116b are cut into the walls of the sleeve at longitudinal positions along the sleeve corresponding to the opposite openings of diametric passages 105 and 106. These ports are of a cross section greater than the cross section of diametric passages 105 and 106 in order to achieve a faster response in the valving system. The present invention, however, is not intended to be limited to this porting cross sectional relationship. "O" ring gaskets 117 are provided along the outer surface of the intermediate sleeve to prevent leakage along the interface between the sleeve and the cylindrical cavity of the control block in which it is mounted.

Intermediate sleeve 104 rests within a cylindrical passage 107 in control block 58. Diametric passage 105 and its

**0073096**

corresponding ports 116a & 116b are located within the assembled valve so that they can be aligned with hydraulic fluid passage 118a which leads from the vehicle input supply line 84 across the valve to passage 118b which in turn leads to the actuator. Diametric passage 106 and its corresponding sleeve ports 114a & 114b are located within the assembled valve so that they can be aligned with a hydraulic fluid passage 120a in the control block which leads from the actuator across the valve to passage 120b and then to the vehicle output supply line 86. The cross sections of the ports of the sleeve correspond to the cross section of passages 118a, 118b, 120a and 120b.

Intermediate sleeve 104 permits the zero point of valve 100 for both input passage 118a-118b and output line 120a-120b to be varied across a range corresponding to the range of rotary movement of the sleeve during which at least a portion of a pair of diametric passages (116a-116b and 118a-118b) intersects input passage 118a-118b or output passage 120a-120b. So long as the sleeve is within this range, the zero point or "off" position of either diametric passage 105 or diametric passage 106 of the inner spool will depend on the precise location of corresponding sleeve ports 116a-116b and 118a-118b. Also, since sleeve ports 116a-116b and 118a-118b are angularly offset by about 180° the input and output supply lines will operate independently from their respective zero points. In the preferred embodiment, however, there is a slight overlap in the line-to-line relationship between the opening and closing of the spool passages and the sleeve ports, to prevent a sharp sudden cut-off in the valve and to accommodate over shooting in the zero point due to inherent friction in the system.

Sleeved spool valve 100 is mounted in the control block 58 as illustrated in FIGURES 3-5. Valve arm 96 is keyed to crown 108 of the inner spool and attached to actuator sensing link 90 as earlier described in connection with vehicle supply valve 88. A second valve arm 122 is keyed to the base 111 of sleeve 107 and operated by a rotary control arm 124 which is attached to valve arm 122 by a rigid linkage 126.

Operation of control arm 124 to rotate the intermediate sleeve will move the zero point of valve 100 in the manner just described. Assuming for purposes of explanation that the seat is at equilibrium before the control lever is moved, this rotation of the sleeve will open the valve to either admit more hydraulic fluid into the actuator across passage 118a-118b or to permit some of the actuator fluid to return to the vehicle hydraulic system across passage 120a-120b. This fluid movement will permit the actuator piston and hence the actuator shaft and cam follower, and actuator sensing link 90 to move, carrying the cam arm and scissors linkage with it. This movement will continue until the actuator sensing link returns the valve to its zero point halting the flow of hydraulic fluid and returning the system once again to equilibrium.

This operation of the sleeved spool valve is illustrated in a stepwise fashion in the diagramatic representation of FIGURES 9a-9d in which seat 12 is raised to two different positions. In FIGURE 9a, sleeve 104 has been rotated to bring ports 116a-116b into alignment with spool diametric passage 106 and passages 118a-118b to allow hydraulic fluid to flow across the valve and into the actuator. The introduction of this fluid causes the actuator to move the cam follower to the right carrying actuator sensing link 90 with it pushing up

0073096

cam arm 42 to raise seat 12. This movement of the actuator
sensing link causes the inner spool to move to the position
indicated in FIGURE 9b, closing off the flow of hydraulic
fluid to leave the seat at the desired raised position with a
state of equilibrium in the overall seat support system.

If the sleeve is now rotated to the position indicated
in FIGURE 9c, hydraulic fluid is again permitted to enter the
actuator causing it to move with the sensing link until the
inner spool "off" position of FIGURE 9b is attained representing
a new equilibrium seat height.

Now that the operation of the individual components of
the present invention has been described, the overall operation
of the present seat support in suspension system will be examined,
beginning as an operator enters a parked tractor and sits down upon
the drivers seat. The seat will be in its closed position in
the parked vehicle with bumpers 46 engaging shaft 41. The operator
next switches on the ignition to start the tractor pressurizing
the tractor hydraulic system which in turn causes piston 62 of
actuator 60 to return to the position in which it was in before
the tractor ignition was switched off. This seat position, as
explained earlier, is determined by the setting of the zero point
of valve 100.

The return of piston 62 to its former position moves
cam follower 52 upward raising scissors linkage 16 to return the
driver to the vertical position at which he was sitting before
the tractor ignition was cut and the vehicle hydraulic system
depressurized. The driver may now readjust the height of his
seat, if he so desires, by moving control arm 124 and intermediate
sleeve 104 to change the zero point of valve 100, admitting or removing fluid from actuator 60 until the equilibrium or "off" position
of the valve is re-established by actuator linked valve inner spool
102.

Once the seat height is set at the desired position, the operator proceeds to his work task, adjusting the amount of damping in this system according to the nature of the terrain over which he is moving. The damping is adjusted by rotating handle 80 which controls valve 78 to restrict or increase the rate of flow of hydraulic fluid between the actuator and the accumulator of the system. When the operator has completed his work task, he parks the tractor and cuts the ignition. This deactivates the hydraulic system of the tractor, permitting the seat support and suspension system to return to its closed position.

While a particular embodiment of the invention has been shown and described, it will be obvious to those skilled in the art that changes and modifications may be made therein without departing from the invention in its broader aspects, and therefore, the object of the appended claims is to cover all such changes and modifications which fall within the true spirit and scope of the invention.

CLAIMS:

1. A seat support and suspension system for mounting a seat to a support surface comprising:

means for attaching a seat to said system;

vertically acting mechanical linkage means for carrying said seat in a generally vertical path with respect to said support surface; and

horizontally acting hydraulic driving means linked to said mechanical linkage means for moving said mechanical linkage means to determine the vertical position of said seat.

2. The seat support and suspension system of claim 1 wherein said mechanical linkage means is a pair of parallel acting scissors linkages.

3. The seat support and suspension system of claim 1 wherein said driving means includes an actuator with a generally horizontally acting piston driven shaft and means for controlling the movement of said piston driven shaft by introducing and releasing fluid from said actuator.

4. The seat support and suspension system of claim 1 wherein said controlling means includes an accumulator fluidly linked to said actuator and means for adjustably dampening the movement of said seat by controlling the rate of fluid flow between said accumulator and said actuator.

5. The seat support and suspension system of claim 3 wherein said controlling means includes an external reservoir of pressurized fluid and adjustment means for introducing or releasing fluid from said accumulator to adjust the vertical position of said seat.

6. The seat support and suspension system of claim 3 wherein said system may be subjected to acceleration inputs tending to displace said seat from a predetermined vertical position and wherein said system includes means responsive to said acceleration inputs for restoring said seat to said predetermined vertical position.

7. The seat support and suspension system of claim 6 wherein said acceleration input responsive means includes an external reservoir of pressurized fluid and automatic leveling means for introducing or removing fluid from said actuator in response to said acceleration inputs.

8. The seat support and suspension system of claim 7 wherein said automatic leveling means includes a valve controlling the movement of fluid between said actuator and said reservoir and means directly linking said piston driven shaft to said valve.

9. The seat support and suspension system of claim 5 wherein said adjustment means comprises a valve with a variable zero point and means for varying the setting of said valve with respect to said zero point in response to the position of said piston driven shaft.

10. The seat support and suspension system of claim 9 wherein said valve comprises a central cylindrical spool having at least one diametric passage mounted for rotation in an intermediate tubular sleeve, said intermediate tubular sleeve having at least a pair of opposite ports positioned on said sleeve for alignment with said diametric passage, said sleeve being rotatable with respect to said spool and said passage to vary said zero point of said valve.

0073096 1

11. The seat support and suspension system of claim 1 wherein said driving means are linked to said mechanical linkage means through a cam and cam follower.

12. The seat support and suspension system of claim 11 wherein said cam is mounted for movement with said mechanical linkage means and said cam follower is mounted for movement with said driving means.

13. A seat support and suspension system for mounting a seat to a support surface comprising:

means for attaching a seat to said system;

pair of vertically acting scissors linkages for carrying said seat in a generally vertical path with respect to said support surface;

an actuator with a generally horizontally acting piston driven shaft and means for controlling the movement of said piston driven shaft by introducing and releasing fluid from said actuator, said piston driven shaft being linked to said mechanical linkage means through a cam and cam follower for moving said mechanical linkage means to determine the vertical position of said seat.

14. A seat support and suspension system for mounting a seat to a support surface comprising:

means for attaching a seat to said system;

vertically acting mechanical linkage means for carrying said seat in a generally vertical path with respect to said support surface; and

an actuator with a generally horizontally acting piston driven shaft and means for controlling the movement of said piston driven shaft by introducing and releasing fluid from said actuator, said piston driven shaft being linked to said mechanical linkage means for moving said mechanical linkage means to determine the vertical position of said seat;

said controlling means including an external reservoir of pressurized fluid and adjustment means for introducing or releasing fluid from said accumulator to adjust the vertical position of said seat.

15. The seat support and suspension system of claim 14 wherein said adjustment means comprises a valve with a variable zero point and means for varying said zero point in response to the position of said piston driven shaft.

16. The seat support and suspension system of claim 15 wherein said valve comprises a central cylindrical spool having at least one diametric passage mounted for rotation in an intermediate tubular sleeve, said intermediate tubular sleeve having at least a pair of opposite ports positioned on said sleeve for alignment with said diametric passage, said sleeve being rotatable with respect to said spool and said passage to vary said zero point of said valve.

17. In a seat support and suspension system of the type including a vertically acting mechanical linkage for carrying the seat in a generally vertical path with respect to a support surface, the improvement which comprises:

a horizontally acting hydraulic driving means linked to said mechanical linkage for determining the vertical position of said seat.

18. In a hydraulic seat support and suspension system in which the height of the seat is determined by adjusting a valve to introduce or release fluid from the system to vary the position of a hydraulically driven piston shaft, the improvement comprising:

a direct link between said shaft and said valve for varying the zero point of said valve.

FIG. 1

12

24

38

18

20

42

32

32a

44

16

43

43

14

44

30a

20

22

30b

41

38

30

32

54

28

26

16

52

34

16

16

42

78

39

40

14

46

44 43

46

46

39

20

FIG. 2

FIG. 3

FIG. 4

FIG. 5

FIG. 6a

108
109
102
105
109
106

FIG. 6

108
10F
11F
58
104
116a
118b
116b
106
120a
114a
6a
6a
11F
6b
6b
118a
114b
120b
110
111

FIG. 6b

58
116a
105
6a
6b
116b
102
104

FIG. 6c

58
114b
106
114a
102
104

FIG. 7

FIG. 8

FIG. 9A

FIG. 9B

FIG. 9C.

FIG. 9D

European Patent
Office

**EUROPEAN SEARCH REPORT**

**0073096**
Application number

EP 82 30 3726

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| | --- | | B 60 N 1/06 |
| X | US-A-4 125 242 (GRAMMER) <br><br> * Whole document * | 1,2,6, 11-13 | |
| | --- | | |
| A | DE-A-2 359 326 (FRITZMEIER) <br> * Whole document * | 1,2,11 | |
| | --- | | |
| A | US-A-3 752 432 (LOWE) <br> * Whole document * | 1-4 | |
| | --- | | |
| A | FR-A-2 453 749 (ISRINGHAUSEN) <br><br> * Whole document * | 1,2,6, 11,12 | |
| | --- | | |
| A | FR-A-2 208 353 (SABLE FRERES) <br> * Whole document * | 1-3 | |
| | | | TECHNICAL FIELDS SEARCHED (Int. Cl. ³) |
| | --- | | |
| A | DE-A-2 849 700 (ISRINGHAUSEN) <br> * Whole document * | 1,2,6 | B 60 N 1/00 |
| | --- | | |
| A | US-A-3 990 668 (THOMPSON) <br><br> * Whole document * | 1,3-9, 13-15 | |
| | --- | | |
| A | GB-A-1 178 476 (TAYLOR) <br> * Whole document * | 1,10 | |
| | ----- | | |

The present search report has been drawn up for all claims

| Place of search <br> THE HAGUE | Date of completion of the search <br> 23-11-1982 | Examiner <br> CORMACI R.C. |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03 82